# EUROPÄISCHE PATENTSCHRIFT

(11) **EP 4 341 081 B1**
(45) Veröffentlichungstag und Bekanntmachung des Hinweises auf die Patenterteilung: **28.01.2026**
(21) Anmeldenummer: 22716330.0
(22) Anmeldetag: 24.03.2022
(51) Int. Cl.: B29D 30/38

(54) **RILLENWALZE, VORRICHTUNG ZUR EINBETTUNG VON FESTIGKEITSTRÄGERN AUS STAHL IN EINE KAUTSCHUKMISCHUNGSBAHN UND VERWENDUNGEN DIESER VORRICHTUNG**
GROOVED ROLLER, DEVICE FOR EMBEDDING REINFORCEMENTS MADE OF STEEL IN A RUBBER MIXTURE WEB, AND USES OF THIS DEVICE
ROULEAU RAINURÉ, DISPOSITIF POUR INCORPORER DES RENFORTS EN ACIER DANS UNE BANDE DE MÉLANGE DE CAOUTCHOUC, ET UTILISATIONS DE CE DISPOSITIF

(30) Priorität: 20.05.2021 DE 102021205119
(43) Veröffentlichungstag der Anmeldung: 27.03.2024
(73) Patentinhaber: Continental Reifen Deutschland GmbH, 30175 Hannover (DE)
(72) Erfinder: DE CASTRO PINHO, Daniel, 30165 Hannover (DE); NEVES, Pedro, 30165 Hannover (DE); SVITEK, Richard, 30165 Hannover (DE); TAUTZ, Frank, 30165 Hannover (DE)
(74) Vertreter: Continental Corporation
(86) Internationale Anmeldenummer: PCT/DE2022/200056
(87) Internationale Veröffentlichungsnummer: WO 2022/242809

(56) Entgegenhaltungen:
- EP-A2- 0 264 071
- WO-A1-2021/028120
- US-A1- 2005 048 280

## Beschreibung

Die Erfindung betrifft eine Kombination aus einer Rillenwalze und im Querschnitt abgeflachten Festigkeitsträgern. Die Erfindung betrifft ferner eine Vorrichtung zur Einbettung von Festigkeitsträgern aus Stahl in eine Kautschukmischungsbahn und Verwendungen dieser Vorrichtung.

Es ist allgemein bekannt und üblich, Festigkeitsträger, wie Stahlkorde oder Monofilamente, welche einen im wesentlichen kreisförmigen Querschnitt aufweisen, mit bekannten Vorrichtungen in eine Kautschukmischungsbahn parallel zueinander und in einer Ebene verlaufend einzubetten. Diese Vorrichtungen weisen üblicherweise zumindest ein Spulengatter mit einer Vielzahl von auf Spulen gewickelten Festigkeitsträgern, Ausrichtelemente zum parallelen Ausrichten der Festigkeitsträger in einer Ebene und unter vorgegebenen gegenseitigen Abständen und eine um ihre Walzenachse drehbar gelagerte Rillenwalze mit Führungsrillen zum Durchführen und zur Übergabe der Festigkeitsträger in den Aufpressspalt eines Walzen-Kalanders auf. Die Führungsrillen weisen zueinander lichte Abstände auf, welche den vorgegebenen lichten Abständen der Festigkeitsträger in der Kautschukmischungsbahn entsprechen. Die verstärkten und mit eingebetteten Festigkeitsträgern versehenen, aus dem Walzen-Kalander austretenden Bahnen werden ihrer weiteren Verwendung, insbesondere bei der Herstellung von Fahrzeugluftreifen beliebiger Bauart, beispielsweise als Gürtellagen oder Karkasseinlagen, zugeführt. Die Führungsrillen der bekannten Rillenwalzen weisen einen annähernd V-förmigen oder wannenförmigen Querschnitt auf.

Die US 7 998 298 B2 offenbart eine Kalanderlinie zur Fertigung einer beispielsweise für eine Karkasseinlage eines Fahrzeugreifens vorgesehenen Festigkeitsträgerlage. Die Kalanderlinie umfasst ein Spulengatter mit einem aufgewickelten Gewebe mit Korden und Schussfäden, eine Spleißpresse, ein Einzugswerk, eine Speichereinrichtung zur schlaufenförmigen Führung des Gewebes, eine Zentriereinrichtung, eine Einrichtung zur Schussfadenentfernung, einen Walzen-Kalander, eine Kühleinrichtung, eine weitere Speichereinrichtung zur schlaufenförmigen Führung der Festigkeitsträgerlage und eine Aufwickeleinrichtung zum Aufwickeln der Festigkeitsträgerlage. Dem Walzen-Kalander ist eine Rillenwalze mit in Umfangsichtung umlaufenden Führungsrillen und eine mit dieser paarweise angeordnete, weitere Rillenwalze mit Führungsrillen vorgeschaltet. Die Führungsrillen weisen eine Rillenbreite, welche - nach Entfernung der Schussfäden aus dem Gewebe - ein Führen der verbleibenden Korde gestattet, und eine Rillentiefe, die üblicherweise kleiner ist als der Korddurchmesser und zumindest 50% des Korddurchmessers beträgt, auf. Diese Abstimmung der Führungsrillen auf den Korddurchmesser soll für eine gute Führung der Korde in den Führungsrillen sorgen, wobei sich die Korde auf einfache Weise aus den Führungsrillen herausbewegen sollen. Die beiden Rillenwalzen sind jeweils schwenkbar angeordnet, wobei sich die Kalanderlinie durch Ausführen entsprechend zeitlich aufeinander abgestimmter Schwenkbewegungen zügig Betreiben lassen soll.

Aus der TW M563957 U ist eine Vorrichtung zur Beschichtung einer Vielzahl nebeneinander verlaufender Festigkeitsträger, welche vorzugsweise aus Glasfasern oder Karbonfasern bestehen, bekannt. Die Vorrichtung umfasst ein Spulengatter, eine Reinigungs- und Trocknungseinrichtung, eine Ausrichteinrichtung, eine Beschichtungseinrichtung, eine Heizpresse und eine Aufwickeleinrichtung. Im Betrieb der Vorrichtung passieren die Festigkeitsträger die Reinigungs- und Trocknungseinrichtung, in welcher etwaige nach der Fertigung auf den Festigkeitsträgern verbliebene Rückstände entfernt werden. Anschließend durchlaufen die Festigkeitsträger die Ausrichteinrichtung, welche zwei Rillenwalzen umfasst und für eine Führung der Festigkeitsträger unter definierten Abständen sorgt. Die Rillenwalzen weisen im Querschnitt rechteckige, umlaufende Vorsprünge und korrespondierend zu diesen ausgebildete Vertiefungen auf. Die ausgerichteten Festigkeitsträger werden durch die Beschichtugnseinrichtung geführt, in welcher die Festigkeitsträger durch Reibung statisch aufgeladen und anschließend durch eine durch Einblasen von Luft erzeugte Wirbelschicht aus thermoplatischen Elastomerpulver geleitet werden. Die Wirbelschicht soll für eine gleichmäßige Beschichtung der Festigkeitsträger sorgen, wobei die Beschichtung insbesondere gleichmäßiger als bei den üblichen "Dip-Prozessen" sein soll. Die beschichteten Festigkeitsträger werden durch die Heizpresse geführt und nachfolgend auf der Aufwickleinrichtung aufgewickelt.

Die WO 2021/028120 A1 offenbart eine Wartungseinrichtung für eine Kalanderlinie zur Einbettung von Festigkeitsträgern aus Stahl in eine Kautschukmischungsbahn. Die Wartungseinrichtung umfasst Rillenwalzen.

Die US 2005/048280 A1 offenbart eine Vorrichtung zur Fertigung einer Festigkeitsträgerlage für eine Gürtelbandage eines Fahrzeugreifens. Die Vorrichtung umfasst eine Dip-Einrichtung und eine Ausrichteinrichtung zum Ausrichten der Korden in einer Ebene vor dem Dip-Prozess sowie bevorzugt Rillenwalzen, wobei insbesondere eine erste Rillenwalze und eine zweite Rillenwalze mit gegenüber den Führungsrillen der ersten Rillenwalze schmäler ausgeführten Führungsrillen vorgesehen ist. Durch Führung der Korde in den Führungsrillen der Rillenwalzen werden die Korde - bezogen auf ihre Transportrichtung - auf eine sich aneinander annähernde Weise geführt.

Fahrzeugluftreifen verstärkende Lagen sollen bestimmte Eigenschaften der Reifen auf besonders vorteilhafte Weise unterstützen, für ein geringes Gewicht der Reifen sorgen und vor allem den Rollwiderstand verringern helfen. Insbesondere an die Festigkeitsträger in Gürtellagen von Fahrzeugluftreifen werden hohe Anforderungen gestellt, beispielsweise und je nach Reifentyp eine vorteilhafte Zugfestigkeit und Biegesteifigkeit, eine hohe Ermüdungsbeständigkeit und eine hohe Korrosionsbeständigkeit. Darüber hinaus sollen die Verstärkungslagen ein geringes Reifengewicht unterstützen, etwa möglichst wenig Gummimaterial enthalten, also möglichst dünn ausgeführt werden können, ohne dass die an sie gestellten Anforderungen darunter leiden. Diesbezüglich sind nun Festigkeitsträger mit einer abgeflachten, nicht kreisförmigen Querschnittsform besonders vorteilhaft, da sie die Dicke der Verstärkungslagen reduzieren helfen, was mit einer Reduktion des verwendeten Gummimaterials und somit einer Verringerung des Reifengewichts einhergeht. Für den Einsatz in Gürtellagen eignen sich hinsichtlich der an sie gestellten Anforderungen daher insbesondere abgeflachte Stahlkorde, wie sie beispielsweise aus der KR 10109719 B1 bekannt sind. Vorteilhafterweise sollen diese Stahlkorde in eine Gürtellage eines Reifens derart eingebettet werden, dass sie mit ihrer größeren Querschnittsdimension parallel zur Reifenachse verlaufen bzw. flach in die jeweilige Verstärkungslage eingebettet sind. Mit herkömmlichen Rillenwalzen ist es nicht möglich, die erwünschte Orientierung von Festigkeitsträgern mit abgeflachtem Querschnitt, zu bewerkstelligen.

Der Erfindung liegt die Aufgabe zugrunde, eine Kombination der eingangs genannten Art zur Verfügung zu stellen, die eine Einbettung von im Querschnitt abgeflachten Festigkeitsträgern aus Stahl derart ermöglicht, dass diese Festigkeitsträger mit ihrer größten Breite parallel oder weitgehend parallel zu den Außenflächen der Kautschukmischungsbahn verlaufen.

Gelöst wird die gestellte Aufgabe erfindungsgemäß mit einer Kombination aus einer Rillenwalze und im Querschnitt abgeflachten Festigkeitsträgern, wobei die Rillenwalze eine Vielzahl von parallel zueinander und über ihrem Umfang umlaufenden Führungsrillen zum Führen der im Querschnitt abgeflachten Festigkeitsträger vor deren Eintreten in einen Walzen-Kalander aufweist, welche Festigkeitsträger im Querschnitt einen ersten Durchmesser und senkrecht zu diesem einen zweiten Durchmesser aufweisen, wobei der zweite Durchmesser kleiner ist als der erste Durchmesser und beide Durchmesser jeweils an den Stellen mit den größten Breiten ermittelt sind,
wobei die Führungsrillen
jeweils einen U-förmigen Querschnitt mit einem parallel zur Walzenachse verlaufenden Rillenboden und zwei senkrecht oder weitgehend senkrecht zur Walzenachse verlaufenden Rillenwänden aufweisen, wobei der Rillenboden eine Breite aufweist, welche zumindest dem ersten Durchmesser des Festigkeitsträgers entspricht und um bis zu 5 % größer ist als dieser, und wobei die Rillenwände eine Höhe aufweisen, welche 75% bis 90% des zweiten Durchmessers des Festigkeitsträgers beträgt, und senkrecht zum Rillenboden oder bezüglich einer Senkrechten zum Rillenboden unter einem Winkel von bis zu 3° nach außen geneigt verlaufen.

Es hat sich überraschenderweise herausgestellt, dass eine einfache Maßnahme, nämlich die erfindungsgemäße spezielle Geometrie der Führungsrillen der Rillenwalze, bewirkt, dass sich durch die Führungsrillen geführte, im Querschnitt abgeflachte Festigkeitsträger von selbst in den Führungsrillen flach liegend ausrichten, sodass sie zumindest weitgehend in der erwünschten Orientierung in den Aufpressspalt zwischen den beiden Walzen des Walzen-Kalanders eintreten. Die Führungsrillen sorgen für eine besonders zuverlässige und exakte Ausrichtung der abgeflachten Festigkeitsträger. Die Neigung der Rillenwände erfolgt nach außen, also derart, dass die Führungsrillen in Richtung ihrer oberen Öffnung geringfügig breiter werden. Dies wirkt einem Verkanten der abgeflachten Festigkeitsträger entgegen.

Bei einer bevorzugten Ausführung der Kombination ist die Breite des Rillenbodens der Führungsrillen um bis zu 3% größer als der erste Durchmesser des Festigkeitsträgers.

Von Vorteil ist ferner eine Ausführung der Führungsrillen, bei welchen die Übergänge zwischen den Rillenwänden und dem Rillenboden verrundet sind, insbesondere mit einem Radius von maximal 1,00 mm. Die verrundeten Eckbereiche am Boden der Führungsrillen wirken einem etwaigen Verkanten der abgeflachten Festigkeitsträger entgegen.

Die Erfindung betrifft ferner eine Vorrichtung zur Einbettung von Festigkeitsträgern aus Stahl in eine Kautschukmischungsbahn, wobei diese Vorrichtung mit zumindest einem Spulengatter mit einer Vielzahl von auf Spulen gewickelten Festigkeitsträgern, mit Ausrichtelementen zum parallelen Ausrichten der Festigkeitsträger in eine Ebene und unter vorgegebenen gegenseitigen Abständen sowie mit einer um ihre Walzenachse drehbar gelagerten, einem Walzen-Kalander vorgeordneten Rillenwalze versehen ist, wobei die Rillenwalze erfindungsgemäß, daher gemäß einem oder mehrerer der Ansprüche 1 bis 3, ausgestaltet ist.

Darüber hinaus betrifft die Erfindung vorteilhafte Verwendungen der Vorrichtung.

Besonders bevorzugt und vorteilhaft ist die Verwendung dieser Vorrichtung zur Einbettung von im Querschnitt abgeflachten Stahlkorden in eine Kautschukmischungsbahn. Insbesondere erfolgt dabei eine Einbettung von Stahlkorden, die aus 2 bis 11 Stahlfilamenten, insbesondere aus 3 bis 9 Stahlfilamenten, besonders bevorzugt aus 4 bis 6, insbesondere aus genau 5, miteinander verdrehten Stahlfilamenten bestehen. Die Vorrichtung gemäß der Erfindung wird daher bevorzugt zur Einbettung von Festigkeitsträgern in Kautschukmischungsbahnen verwendet, die besonders gewichtsreduzierend ausgeführt werden sollen und dabei weitere an sie gestellte Anforderungen, beispielsweise hinsichtlich Zugfestigkeit und Biegesteifigkeit, Ermüdungsbeständigkeit und Korrosionsbeständigkeit, besonders gut erfüllen.

Dabei ist eine Verwendung besonders vorteilhaft, bei welcher eine Einbettung von abgeflachten Stahlkorden mit mehreren abgeflachten Stahlfilamenten erfolgt, welche einen größeren Durchmesser und im rechten Winkel zu diesem einen kleineren Durchmesser aufweisen, wobei die Durchmesser an den Stellen mit den größten Breiten ermittelt sind und das Verhältnis des kleineren Durchmessers zum größeren Durchmesser 0,80 bis 0,98, insbesondere 0,85 bis 0,98, beträgt. Auf diese Weise werden mit Stahlkorden verstärkte Festigkeitsträgerlagen zur Verfügung gestellt, die den erwähnten Anforderungen besonders gut gerecht werden.

Bei einer alternativen, mit analogen vorteilhaften Effekten verbundenen Verwendung der Vorrichtung wird diese zur Einbettung von abgeflachten Stahlmonofilamenten in eine Kautschukmischungsbahn eingesetzt.

Werden Verstärkungslagen für Fahrzeugluftreifen erstellt, so ist es vorteilhaft, wenn Stahlkorde oder Stahlmonofilamente, deren Verhältnis zwischen dem ersten Durchmesser und dem zweiten Durchmesser 1,10 bis 3,00, vorzugweise 1,20 bis 1,90, beträgt, in eine Kautschukmischungsbahn eingebettet werden.

Gemäß der Erfindung ist daher eine Verwendung der in einer erfindungsgemäßen Vorrichtung hergestellten Kautschukmischungsbahn als Gürtellage in einem Gürtelverband eines Fahrzeugluftreifens, als Karkasse eines Fahrzeugluftreifens oder als Wulstverstärkerlage eines Fahrzeugluftreifens besonders vorteilhaft.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Prinzipdarstellung einer Vorrichtung zur Herstellung einer gummierten Festigkeitsträgerlage mit Festigkeitsträgern aus Stahl für einen Fahrzeugluftreifen,
Fig. 2 einen Teilbereich eines axialen Längsschnittes einer Rillenwalze,
Fig. 3 eine vergrößerte Ansicht des Details Dₑ aus Fig. 2,
Fig. 4 einen Querschnitt eines Ausführungsbeispieles eines Stahlkordes und
Fig. 5 einen Querschnitt eines Teilbereiches einer Verstärkungslage eines Fahrzeugluftreifens.

Mit Festigkeitsträgern aus Stahl verstärkte Lagen in Fahrzeugluftreifen sind insbesondere Gürtellagen, Karkasseinlagen oder Wulstverstärkerlagen in Wulstbereichen.

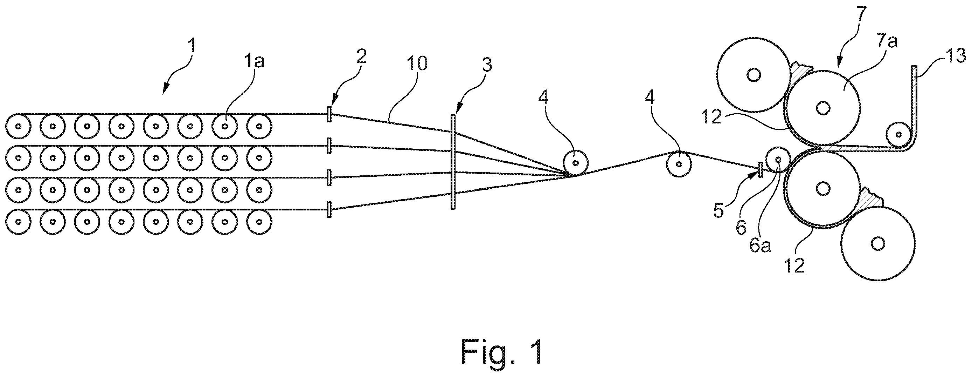

Fig. 1 zeigt wesentliche, in Verarbeitungsrichtung aufeinanderfolgende Bestandteile einer Vorrichtung zur Gummierung von Festigkeitsträgern 10. Beim gezeigten Ausführungsbeispiel sind diese Bestandteile zumindest ein Spulengatter 1, Ausrichtelemente, zu welchen insbesondere Lochplatten 2, Sortierplatten 3, Führungsrollen 4 und ein Teilungskamm 5 gehören, ferner eine um ihre Walzenachse 6a drehbar gelagerte Rillenwalze 6 und ein Walzen-Kalander 7. Das Spulengatter 1 ist mit einer Vielzahl von Spulenhaltern und Spulen 1a versehen, auf welchen Festigkeitsträger 10 übereinstimmender Ausgestaltung bzw. Konstruktion aufgewickelt sind. Die am Spulengatter 1 angeordneten Spulenhalter sind jeweils mit einer einstellbaren, beispielsweise elektromagnetischen, Fadenbremse versehen, um derart für eine möglichst optimale Spannung der Festigkeitsträger 10 bei deren Gummierung sorgen.

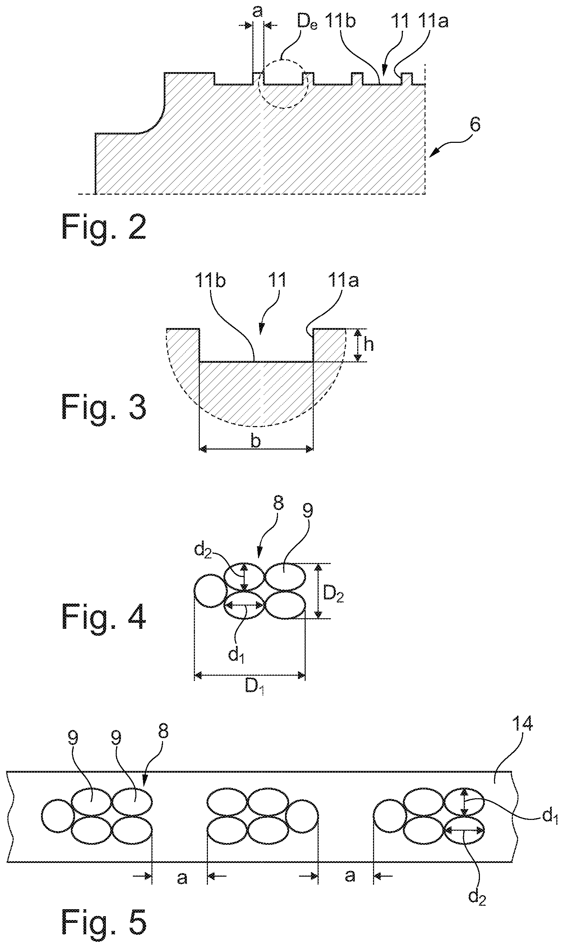

Die Festigkeitsträger 10 sind entweder abgeflachte Stahlkorde, die bei beliebiger Konstruktion aus 2 bis 11 Stahlfilamenten, insbesondere aus 3 bis 9, Stahlfilamenten, bestehen, oder abgeflachte Stahlmonofilamente. Die Stahlkorde und die Stahlmonofilamente weisen einen insgesamt nicht kreisförmigen, flachen Querschnitt mit einem größeren Durchmesser D₁ (siehe D₁ in Fig. 4), und einem im rechten Winkel zum dieser vorliegenden, gegenüber D₁ kleineren Durchmesser D₂ (siehe D₂ in Fig. 4) auf. Die Durchmesser D₁ und D₂ werden an den Stellen mit den größten Breiten ermittelt. Das Verhältnis von D₁ zu D₂ beträgt insbesondere 1,10 bis 3,00, vorzugsweise 1,20 bis 1,90. Die Stahlfilamente des Stahlkordes und die Stahlmonofilamente weisen insbesondere eine übliche Zugfestigkeit von 2.500 N/mm² bis 4.500 N/mm² auf, die Zugfestigkeit befindet sich daher im Wesentlichen im Bereich von NT (Normal Tensile) bis zu UT (Ultra Tensile).

Fig. 4 zeigt einen schematischen Querschnitt eines abgeflachten Stahlkordes 8 mit fünf Stahlfilamenten 9. Die Herstellung des abgeflachten Stahlkorde 8 erfolgt derart, dass fünf gleichgestaltete und im Querschnitt kreisförmige Stahlfilamente mit einem Durchmesser d von 0,10 mm bis 0,60 mm, insbesondere von 0,18 mm bis 0,45 mm, miteinander verdreht werden, sodass vorerst im Querschnitt runde, nahezu kreisförmige Stahlkorde als "Ursprungskorde" entstehen. Beispielsweise durch einen Walzvorgang werden diese "Ursprungskorde" verformt, sodass jeweils zumindest zwei Stahlfilamente 9, insbesondere im Bereich ihrer gegenseitigen Kontaktstellen lokal abgeflacht bzw. verformt werden und dabei zumindest zum Teil eine gleichmäßig oder ungleichmäßig abgeflachte Querschnittsform erhalten (in der schematischen Fig. 4 sind ungleichmäßige Querschnittformen nicht gezeigt), wobei auch der Stahlkord 8 insgesamt eine abgeflachte Querschnittsgestalt erhält. Durch die Verdrehung der Stahlfilamente 9 sind, in unterschiedlichen Querschnitten über die Länge des Stahlkordes 8 betrachtet, Stahlfilamente 9 unterschiedlich verformt, manche ggf. auch nicht verformt und besitzen dann lokal auch ihren ursprünglich kreisförmigen Querschnitt, wie es in Fig. 4 anhand des links außen befindlichen Stahlfilaments 9 gezeigt ist.

In der gewalzten, abgeflachten Querschnittsform des Stahlkordes 8 weisen die durch Verformung abgeflachten Stahlfilamente 9 quer zur Verformungsrichtung einen größeren Durchmesser d₁ und im rechten Winkel zu diesem einen kleineren Durchmesser d₂ auf. Auch die Durchmesser d₁ und d₂ werden an den Stellen mit den größten Breiten ermittelt. Dabei beträgt das Verhältnis von d₂ zu d₁ insbesondere 0,80 bis 0,98, vorzugsweise 0,85 bis 0,98. Beim gezeigten Beispiel des Stahlkordes 8 beträgt ferner das Verhältnis von D₁ zu D₂ in der Größenordnung von 1,6.

Abgeflachte Stahlmonofilamente weisen beispielsweise eine ovale, elliptische oder ellipsenähnliche Querschnittsform auf, ihr größerer Durchmesser beträgt 0,10 mm bis 1,50 mm, ihr kleinerer Durchmesser 0,10 mm bis 1,00 mm, wobei das Verhältnis des größeren Durchmessers zum kleineren Durchmesser 1,10 bis 3,00, insbesondere 1,20 bis 1,90, beträgt. Auch diese Durchmesser werden an den Stellen mit den größten Breiten ermittelt.

Wie Fig. 1 zeigt, passieren die von den Spulen 1 a des Spulengatters 1 abgewickelten Festigkeitsträger 10 - abgeflachte Stahlkorde oder abgeflachte Stahlmonofilamente in beliebiger Orientierung zueinander - Löcher in den Lochplatten 2, werden anschließend durch die Sortierplatten 3 hindurch und über mehrere Führungsrollen 4 geführt und dabei parallel zueinander und in einer Ebene verlaufend ausgerichtet. Die Festigkeitsträger 10 werden nachfolgend zwischen Lamellen eines Teilungskammes 5 in bekannter Weise einzeln durchgefädelt, wobei im Teilungskamm 5 der erwünschte gegenseitige Abstand der Festigkeitsträger 10 eingestellt wird. Die Schar aus Festigkeitsträgern 10 läuft anschließend in Führungsrillen 11 (Fig. 2) der Rillenwalze 6, jeder Festigkeitsträger 10 in einer Führungsrille 11, wobei der gegenseitige lichte Abstand a der Führungsrillen 11 (Fig. 2) an der Außenfläche der Rillenwalze 6 dem durch die Fadenteilung am Teilungskamm 5 vorgegebenen Abstand der Festigkeitsträger 10 zueinander entspricht. Die Führungsrillen 11 verlaufen über den Umfang der Rillenwalze 6 und parallel zueinander. Die besondere Ausgestaltung der Führungsrillen 11 wird weiter unten anhand der Fig. 3 näher erläutert.

Aus den Führungsrillen 11 der Rillenwalze 6 läuft die Schar aus Festigkeitsträger 10 in den Aufpressspalt zwischen zwei Kalanderwalzen 7a des Walzen-Kalanders 7. Dem Aufpressspalt wird ferner sowohl von oben als auch von unten kommend eine kalandrierte Kautschukmischung 12 zugeführt, sodass die Festigkeitsträger 10 parallel zueinander verlaufend in Kautschukmischung eingebettet werden. Die Kautschukmischungsbahn 13 mit derart eingebetteten Festigkeitsträger 10 verlässt den Aufpressspalt und wird der weiteren Verarbeitung beim Reifenaufbau zugeführt.

Damit sämtliche Festigkeitsträger 10 flach liegend, daher mit ihrer größeren Dimension, dem Durchmesser D₁, möglichst parallel zu den Außenflächen der Kautschukmischungsbahn 13 verlaufend eingebettet werden können, weisen die Führungsrillen 11 einen besonderen U-förmigen Querschnitt auf. Gemäß Fig. 2 und Fig. 3 ist jede Führungsrille 11 von zwei zur Walzenachse 6a (Fig. 1) senkrecht verlaufenden Rillenwänden 11a und einem parallel zur Walzenachse 6a verlaufenden Rillenboden 11b gebildet. Die Breite b (Fig. 3) des Rillenbodens 11b ist an den Durchmesser D₁ (Fig. 4) des jeweiligen Festigkeitsträgers 10 (in Fig 4: Stahlkord 8) angepasst, indem die Breite b des Rillenbodens 11b zumindest dem Durchmesser D₁ entspricht und um bis zu 5 %, insbesondere bis zu 3%, größer ist als dieser. Die Höhe h (Fig. 3) der Rillenwände 11a ist an den Durchmesser D₂ (Fig. 4) des jeweiligen Festigkeitsträgers 10 (in Fig. 4: Stahlkord 8) angepasst, wobei die Höhe h 50% bis 90%, vorzugsweise bis zu 75%, des Durchmesser D₂ entspricht. Die Übergänge zwischen den Rillenwänden 11b und dem Rillenboden 11a sind vorzugsweise mit einem Radius von maximal 1,0 mm verrundet. Die in beliebiger Orientierung und unter geringer Spannung in die Führungsrillen 11 eintretenden abgeflachten Festigkeitsträger 10 richten sich infolge der Geometrie der Führungsrillen 11 von selbst flach in den Führungsrillen 11 aus, sodass sie zumindest weitgehend in der oben erwähnten Orientierung in den Aufpressspalt zwischen den beiden Kalanderwalzen 7a des Walzen-Kalanders 7 eintreten.

Fig. 5 zeigt einen Querschnitt durch einen Abschnitt einer Verstärkungslage 14, beispielsweise einer rohen Gürtellage, für einen Fahrzeugluftreifen mit eingebetteten Stahlkorden 8 gemäß Fig. 4. Der gegenseitige lichte Abstand a der Stahlkorden 8 entspricht dem lichten Abstand a zwischen einander benachbarten Führungsrillen 11 der Rillenwalze 6.

Mit derart eingebetteten Festigkeitsträgern 10 lasst sich vor allem die Dicke von Verstärkungslagen in Fahrzeugluftreifen gegenüber vergleichbaren, im Querschnitt kreisförmigen Festigkeitsträger deutlich verringern und damit das Gewicht des Reifens vorteilhaft reduzieren.

### Bezugsziffernliste

- 1: Spulengatter
- 1a: Spule
- 2: Lochplatte
- 3: Sortierplatte
- 4: Führungsrolle
- 5: Teilungskamm
- 6: Rillenwalze
- 6a: Walzenachse
- 7: Walzen-Kalander
- 7a: Kalanderwalzen
- 8: Stahlkord
- 9: Stahlfilament
- 10: Festigkeitsträger
- 11: Führungsrille
- 11a: Rillenwand
- 11b: Rillenboden
- 12: Kautschukmischung
- 13: Kautschukmischungsbahn
- 14: Verstärkungslage
- a: Abstand
- b: Breite des Rillenbodens
- h: Höhe der Rillenwand
- D₁, D₂: Durchmesser
- d₁, d₂: Durchmesser
- Dₑ: Detail

## Patentansprüche

1. Kombination aus einer Rillenwalze (6) und im Querschnitt abgeflachten Festigkeitsträgern (10), wobei die Rillenwalze (6) eine Vielzahl von parallel zueinander und über ihrem Umfang umlaufenden Führungsrillen (11) zum Führen der im Querschnitt abgeflachten Festigkeitsträger (10) vor deren Eintreten in einen Walzen-Kalander (7) aufweist, welche Festigkeitsträger (10) im Querschnitt einen ersten Durchmesser (D₁) und senkrecht zu diesem einen zweiten Durchmesser (D₂) aufweisen, wobei der zweite Durchmesser (D₂) kleiner ist als der erste Durchmesser (D₁) und beide Durchmesser (D₁, D₂) jeweils an den Stellen mit den größten Breiten ermittelt sind,
wobei die Führungsrillen (11)
jeweils einen U-förmigen Querschnitt mit einem parallel zur Walzenachse (6a) verlaufenden Rillenboden (11b) und zwei senkrecht oder weitgehend senkrecht zur Walzenachse (6a) verlaufenden Rillenwänden (11a) aufweisen, wobei der Rillenboden (11b) eine Breite (b) aufweist, welche zumindest dem ersten Durchmesser (D₁) des Festigkeitsträgers (10) entspricht und um bis zu 5 % größer ist als dieser, und wobei die Rillenwände (11a) eine Höhe (h) aufweisen, welche 75% bis 90% des zweiten Durchmessers (D₂) des Festigkeitsträgers (10) beträgt, und senkrecht zum Rillenboden (11b) oder bezüglich einer Senkrechten zum Rillenboden (11b) unter einem Winkel von bis zu 3° nach außen geneigt verlaufen.

2. Kombination nach Anspruch 1, **dadurch gekennzeichnet, dass** die Breite (b) des Rillenbodens (11b) um bis zu 3% größer ist als der erste Durchmesser (D₁) des Festigkeitsträgers (10).

3. Kombination nach Anspruch 1 oder 2, **dadurch gekennzeichnet, dass** die Übergänge zwischen den Rillenwänden (11a) und dem Rillenboden (11b) verrundet sind, insbesondere mit einem Radius von maximal 1,0 mm.

4. Vorrichtung zur Einbettung von Festigkeitsträgern (10) aus Stahl in eine Kautschukmischungsbahn (13) mit zumindest einem Spulengatter (1) mit einer Vielzahl von auf Spulen (1a) gewickelten Festigkeitsträgern (10), mit Ausrichtelementen zum parallelen Ausrichten der Festigkeitsträger (10) in einer Ebene und unter vorgegebenen gegenseitigen Abständen (a), mit einer um ihre Walzenachse (6a) drehbar gelagerten, einem Walzen-Kalander vorgeordneten Rillenwalze (6), wobei die Rillenwalze (6) und die Festigkeitsträger gemäss einem oder mehreren der Ansprüche 1 bis 3 ausgestaltet sind.

5. Verwendung der Vorrichtung nach Anspruch 4 zur Einbettung von im Querschnitt abgeflachten Stahlkorden (8) in eine Kautschukmischungsbahn (13).

6. Verwendung nach Anspruch 5 zur Einbettung von abgeflachten Stahlkorden (8), die aus 2 bis 11 Stahlfilamenten (9), insbesondere aus 3 bis 9 Stahlfilamenten (9), bestehen.

7. Verwendung nach Anspruch 6 zur Einbettung von abgeflachten Stahlkorden (8), die aus 4 bis 6 miteinander verdrehten Stahlfilamenten (9) bestehen.

8. Verwendung nach Anspruch 6 oder 7 zur Einbettung von abgeflachten Stahlkorden (8), die aus 5 miteinander verdrillten Stahlfilamenten (9) bestehen.

9. Verwendung nach einem der Ansprüche 5 bis 8 zur Einbettung von abgeflachten Stahlkorden (8) mit abgeflachten Stahlfilamenten, welche einen größeren Durchmesser (d₁) und im rechten Winkel zu diesem einen kleineren Durchmesser (d₂) aufweisen, wobei die Durchmesser (d₁, d₂) an den Stellen mit den größten Breiten ermittelt sind.

10. Verwendung nach Anspruch 9 zur Einbettung von abgeflachten Stahlkorden (8) mit abgeflachten Stahlfilamenten (9), bei welchem das Verhältnis des kleineren Durchmessers (d₂) zum größeren Durchmesser (d₁) 0,80 bis 0,98, insbesondere 0,85 bis 0,98, beträgt.

11. Verwendung der Vorrichtung nach Anspruch 4 zur Einbettung von abgeflachten, nicht kreisförmigen Stahlmonofilamenten in eine Kautschukmischungsbahn (13).

12. Verwendung der Vorrichtung nach einem der Ansprüche 4 bis 9 zur Einbettung von abgeflachten Stahlkorden (8) oder Stahlmonofilamenten, deren Verhältnis zwischen dem ersten Durchmesser (D₁) und dem zweiten Durchmesser (D₂) 1,10 bis 3,00, vorzugsweise 1,20 bis 1,90, beträgt.

13. Verwendung der in einer Vorrichtung nach Anspruch 4 hergestellten Kautschukmischungsbahn als Gürtellage in einem Gürtelverband eines Fahrzeugluftreifens, als Karkasse eines Fahrzeugluftreifens oder als Wulstverstärkerlage eines Fahrzeugluftreifens.

## Claims

1. Combination of a grooved roller (6) and strength members (10) of flattened cross section, wherein the grooved roller (6) has a multiplicity of guide grooves (11) which run parallel to one another and in encircling fashion over the circumference of said grooved roller and which serve for guiding the strength members (10) of flattened cross section before they enter a roller calender (7), which strength members (10) have, in cross section, a first diameter (D₁) and, perpendicular thereto, a second diameter (D₂), wherein the second diameter (D₂) is smaller than the first diameter (D₁), and the two diameters (D₁, D₂) are each determined at the points with the greatest widths,
wherein the guide grooves (11)
each have a U-shaped cross section with a groove base (11b) extending parallel to the roller axis (6a) and with two groove walls (11a) extending perpendicularly or substantially perpendicularly to the roller axis (6a), wherein the groove base (11b) has a width (b) which at least corresponds to, and is up to 5% greater than, the first diameter (D₁) of the strength member (10), and wherein the groove walls (11a) have a height (h) which is 75% to 90% of the second diameter (D₂) of the strength member (10), and extend perpendicular to the groove base (11b) or with an outward inclination at an angle of up to 3° in relation to a perpendicular to the groove base (11b).

2. Combination according to Claim 1, **characterized in that** the width (b) of the groove base (11b) is up to 3% greater than the first diameter (D₁) of the strength member (10).

3. Combination according to Claim 1 or 2, **characterized in that** the transitions between the groove walls (11a) and the groove base (11b) are rounded, in particular with a radius of at most 1.0 mm.

4. Device for embedding steel strength members (10) into a rubber mixture web (13), comprising at least one creel (1) having a multiplicity of strength members (10) wound up on spools (1a), comprising aligning elements for aligning the strength members (10) in parallel in a plane at predefined distances (a) from one another, and comprising a grooved roller (6), which is mounted so as to be able to rotate about its roller axis (6a) and is upstream of a roller calender, wherein the grooved roller (6) and the strength member are configured according to one or more of Claims 1 to 3.

5. Use of the device according to Claim 4 for embedding steel cords (8) of flattened cross section into a rubber mixture web (13).

6. Use according to Claim 5 for embedding flattened steel cords (8) which consist of 2 to 11 steel filaments (9), in particular 3 to 9 steel filaments (9).

7. Use according to Claim 6 for embedding flattened steel cords (8) which consist of 4 to 6 steel filaments (9) twisted together.

8. Use according to Claim 6 or 7 for embedding flattened steel cords (8) which consist of 5 intertwined steel filaments (9).

9. Use according to one of Claims 5 to 8 for embedding flattened steel cords (8) comprising flattened steel filaments having a larger diameter (d₁) and, at right angles thereto, a smaller diameter (d₂), wherein the diameters (d₁, d₂) are determined at the points with the greatest widths.

10. Use according to Claim 9 for embedding flattened steel cords (8) comprising flattened steel filaments (9), for which the ratio of the smaller diameter (d₂) to the larger diameter (d₁) is 0.80 to 0.98, in particular 0.85 to 0.98.

11. Use of the device according to Claim 4 for embedding flattened, non-circular steel monofilaments into a rubber mixture web (13).

12. Use of the device according to one of Claims 4 to 9 for embedding flattened steel cords (8) or steel monofilaments of which the ratio between the first diameter (D₁) and the second diameter (D₂) is 1.10 to 3.00, preferably 1.20 to 1.90.

13. Use of the rubber mixture web produced in a device according to Claim 4 as belt ply in a belt assembly of a pneumatic vehicle tyre, as carcass for a pneumatic vehicle tyre, or as bead reinforcement ply for a pneumatic vehicle tyre.

## Revendications

1. Combinaison d'un rouleau rainuré (6) et de supports de résistance (10) aplatis en section transversale, le rouleau rainuré (6) présentant une pluralité de rainures de guidage (11) parallèles entre elles et s'étendant sur sa circonférence pour guider les supports de résistance (10) aplatis en section transversale avant leur entrée dans une calandre à rouleaux (7), lesquels supports de résistance (10) présentant un premier diamètre (D₁) dans la section transversale et un deuxième diamètre (D₂) perpendiculaire à celui-ci, le deuxième diamètre (D₂) étant plus petit que le premier diamètre (D₁) et les deux diamètres (D₁, D₂) étant déterminés respectivement aux emplacements présentant les plus grandes largeurs,
les rainures de guidage (11)
présentant chacune une section transversale en forme de U avec un fond de rainure (11b) s'étendant parallèlement à l'axe de rouleau (6a) et deux parois de rainure (11a) s'étendant perpendiculairement ou largement perpendiculairement à l'axe de rouleau (6a), le fond de rainure (11b) présentant une largeur (b) qui correspond au moins au premier diamètre (D₁) du support de résistance (10) et qui est supérieure à celui-ci de jusqu'à 5 %, et les parois de rainure (11a) présentant une hauteur (h) qui représente 75 % à 90 % du deuxième diamètre (D₂) du support de résistance (10) et s'étendent perpendiculairement au fond de rainure (11b) ou inclinées avec un angle vers l'extérieur de jusqu'à 3° par rapport à une perpendiculaire au fond de rainure (11b).

2. Combinaison selon la revendication 1, **caractérisée en ce que** la largeur (b) du fond de rainure (11 b) est supérieure de jusqu'à 3 % au premier diamètre (D₁) du support de résistance (10).

3. Combinaison selon la revendication 1 ou 2, **caractérisée en ce que** les transitions entre les parois des rainure (11a) et le fond des rainure (11b) sont arrondies, notamment avec un rayon maximal de 1,0 mm.

4. Dispositif pour l'incorporation de supports de résistance (10) en acier dans une bande de mélange de caoutchouc (13) comprenant au moins un métier à bobines (1) avec une pluralité de supports de résistance (10) enroulés sur des bobines (1a), avec des éléments d'alignement pour aligner les supports de résistance (10) parallèlement dans un plan et à des distances mutuelles prédéfinies (a), avec un rouleau rainuré (6) monté de manière rotative autour de son axe de rouleau (6a), agencé en amont d'une calandre à rouleaux, le rouleau rainuré (6) et les supports de résistance étant conçus selon une ou plusieurs des revendications 1 à 3.

5. Utilisation du dispositif selon la revendication 4 pour l'incorporation de câbles d'acier (8) aplatis en section transversale dans une bande de mélange de caoutchouc (13).

6. Utilisation selon la revendication 5 pour l'incorporation de câbles d'acier aplatis (8) qui sont constitués de 2 à 11 filaments d'acier (9), notamment de 3 à 9 filaments d'acier (9).

7. Utilisation selon la revendication 6 pour l'incorporation de câbles d'acier aplatis (8) qui sont constitués de 4 à 6 filaments d'acier (9) torsadés les uns avec les autres.

8. Utilisation selon la revendication 6 ou 7 pour l'incorporation de câbles d'acier aplatis (8) qui sont constitués de 5 filaments d'acier (9) vrillés les uns avec les autres.

9. Utilisation selon l'une quelconque des revendications 5 à 8 pour l'incorporation de câbles d'acier aplatis (8) avec des filaments d'acier aplatis qui présentent un plus grand diamètre (d₁) et, à angle droit de celui-ci, un plus petit diamètre (d₂), les diamètres (d₁, d₂) étant déterminés aux emplacements présentant les plus grandes largeurs.

10. Utilisation selon la revendication 9 pour l'incorporation de câbles d'acier aplaties (8) avec des filaments d'acier aplatis (9), où le rapport entre le plus petit diamètre (d₂) et le plus grand diamètre (d₁) est de 0,80 à 0,98, notamment de 0,85 à 0,98.

11. Utilisation du dispositif selon la revendication 4 pour l'incorporation de monofilaments d'acier aplatis non circulaires dans une bande de mélange de caoutchouc (13).

12. Utilisation du dispositif selon l'une quelconque des revendications 4 à 9 pour l'incorporation de câbles d'acier aplatis (8) ou de monofilaments d'acier dont le rapport entre le premier diamètre (D₁) et le deuxième diamètre (D₂) est de 1,10 à 3,00, de préférence de 1,20 à 1,90.

13. Utilisation de la bande de mélange de caoutchouc fabriquée dans un dispositif selon la revendication 4 en tant que couche de ceinture dans une structure de ceinture d'un pneumatique de véhicule, en tant que carcasse d'un pneumatique de véhicule ou en tant que couche de renfort de talon d'un pneumatique de véhicule.
